# EUROPEAN PATENT APPLICATION

(11) **EP 2 869 087 A1**
(43) Date of publication of application: **06.05.2015**
(21) Application number: 13191635.5
(22) Date of filing: 05.11.2013
(51) Int. Cl.: G01S 19/34, G01S 19/22

(54) **Method and apparatus of determining an output relating to a satellite based positioning system in a wireless device**

(71) Applicant: Telefonaktiebolaget L M Ericsson (publ), 164 83 Stockholm (SE)
(72) Inventor: Anyuru, Andreas, 224 74 Lund (SE); Björkengren, Ulf, 237 34 Bjärred (SE); Bergström, Mats, 211 57 Malmö (SE); Fagerström, Mats, 212 36 Malmö (SE); Pörscke, Benn, 245 44 Staffanstorp (SE); Ryd, Patrik, 233 38 Svedala (SE)
(74) Representative: Valea AB

(57) **Abstract**

Method in a network node (NN) for determining an output relating to a satellite-based positioning system (SBPS) in a wireless device (WD). The NN obtains a digital signal based on obtained audio signals in the WD environment. The audio signals comprise one or more original signals and one or more reflected signals. Each reflected signal corresponds to an original signal. The NN calculates: a number of reflected signals. For each reflected signal, the NN calculates a time delay between an original signal corresponding to the reflected signal, and the reflected signal. The NN, for each reflected signal also calculates a relative strength of the reflected signal in comparison with the original signal corresponding to the reflected signal. The NN also determines an output based on the calculated values. The output comprises whether or not the SBPS can access satellite signals to generate a WD location.

## Description

### TECHNICAL FIELD

Embodiments herein relate to a network node, and methods therein. In particular, embodiments herein relate to determining an output relating to a satellite based positioning system in a wireless device.

### BACKGROUND

Communication devices such as terminals are also known as e.g. User Equipments (UE), mobile terminals, wireless terminals and/or mobile stations. Terminals are enabled to communicate wirelessly in a cellular communications network or wireless communication system, sometimes also referred to as a cellular radio system or cellular networks. The communication may be performed e.g. between two terminals, between a terminal and a regular telephone and/or between a terminal and a server via a Radio Access Network (RAN) and possibly one or more core networks, comprised within the cellular communications network.

Terminals may further be referred to as mobile telephones, cellular telephones, laptops, or surf plates with wireless capability, just to mention some further examples. The terminals in the present context may be, for example, portable, pocket-storable, hand-held, computer-comprised, or vehicle-mounted mobile devices, enabled to communicate voice and/or data, via the RAN, with another entity, such as another terminal or a server.

The cellular communications network covers a geographical area which is divided into cell areas, wherein each cell area being served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the terminals within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission is in LTE controlled by the radio base station.

There are many reasons or use cases where it is important for a wireless device, such as a smartphone, to know its position. Today's most common strategy to find out the position of a wireless device is to use a Global Positioning System (GPS) receiver in the wireless device. A GPS controller in the GPS system calculates the position of the wireless device based on information, e.g., time and satellite position, sent from GPS satellites high above Earth.

In several use cases, it is desirable for a wireless device to continuously know its position. Two examples are:
- In an intelligent personal assistant, such as Google Now
- In Opportunistic Sensing, see http://www.ists.dartmouth.edu/library/437.pdf and http://www.ericsson.com/networkedsociety/.

Even if using the GPS for positioning is an accurate method, it has the disadvantage that the GPS controller in the wireless device usually consumes a lot of energy. In addition, the GPS controller must have an unobstructed line of sight to four or more GPS satellites to be able to generate a location of the wireless device. This means that for a wireless device that is indoors, its GPS controller will normally not work.

### SUMMARY

It is an object of embodiments herein to improve the power consumption management in a wireless device due to usage of a satellite-based positioning system, such as GPS, in the wireless device.

According to a first aspect of embodiments herein, the object is achieved by a method performed by a network node for determining an output relating to a satellite-based positioning system in a wireless device. The network node and the wireless device operate in a wireless communications network. The network node obtains a digital signal based on obtained audio signals in the environment of the wireless device. The audio signals comprise one or more original signals and one or more reflected signals. Each of the one or more reflected signals corresponds to a respective original signal of the one or more original signals. The network node calculates, based on the obtained digital signal, values for: a number of reflected signals in the audio signals. For each reflected signal of the number of reflected signals, the network node calculates a time delay between an original signal of the number of one or more original signals corresponding to the reflected signal, and the reflected signal. The network node, for each reflected signal of the number of reflected signals also calculates a relative strength of the reflected signal in comparison with the original signal of the number of one or more original signals corresponding to the reflected signal. The network node also determines an output based on the calculated values. The output comprises whether or not the satellite-based positioning system can get access to satellite signals to generate a location of the wireless device.

According to additional aspects of embodiments herein, the object is achieved by corresponding embodiments in the network node.

By determining whether or not the satellite-based positioning system can get access to the satellite signals to generate a location of the wireless device, a decision can be made on whether to turn on, if access is possible, or off, if access is not possible, the satellite-based positioning system. Thus, a wireless device which contains a satellite-based positioning system, e.g., GPS, controller may use the satellite-based positioning system, e.g., GPS, controller in a more power efficient way, which may result in longer battery life for the wireless device. The way of controlling the satellite-based positioning system, and managing power consumption in the wireless device is thus improved.

Further advantages of some embodiments disclosed herein are discussed further down below.

### BRIEF DESCRIPTION OF THE DRAWINGS

Examples of embodiments herein are described in more detail with reference to attached drawings in which:
- Figure 1: is a schematic block diagram illustrating embodiments in a wireless communications system.
- Figure 2: is a flowchart depicting embodiments of a method in a network node.
- Figure 3: is a schematic graphical representation of the output from a recording after autocorrelation with a microphone in a smartphone, of a conversation in a meeting room.
- Figure 4: is a schematic graphical representation of the output from a recording after autocorrelation with a microphone in a smartphone, of sound in a forest.
- Figure 5: is a schematic block diagram illustrating embodiments of the network node.
- Figure 6: is a schematic block diagram illustrating an overview of embodiments of a method in the network node.

### DETAILED DESCRIPTION

As part of the solution according to embodiments herein, a problem will first be identified and discussed.

As explained in the Background section, a GPS controller often consumes a considerable amount of energy. The same applies to other satellite-based positioning systems. The signal that is transmitted from the satellites to the wireless devices is transmitted with a data rate as low as, e.g., 50 Bits Per Second (bps) and a GPS controller may need to be turned on for up to 30 seconds to receive the full data packets from the satellites to calculate its position.

If a wireless device may determine when it is indoors, it can save energy, which may result in longer battery life, by not powering on the satellite-based positioning system at all as long as the wireless device is, for example, indoors. Satellite-based positioning system functionality is severely hampered when used indoors, or in a city environment with high buildings obstructing the sky view, or the like.

Embodiments herein are based on the realization that audio signals captured from the environment of the wireless device can be used to tell whether the wireless device is in an environment as described above, or not. The parameters that are extracted from the audio signal for this analysis are, for example, the number of reflections found in the signal, and for each of these reflections the time delay between the original signal and the reflected signal, and the relative strength of the reflected signal.

In satellite-based positioning system hampered environments, there will be a larger number of reflections, with a higher reflection strength, and with shorter delays, than in the opposite type of environments. When adequate threshold values can be found to compare with, a decision may be made on what type of environment the wireless device currently is in, and this may then be used to decide whether the satellite-based positioning system controller may be used or not for obtaining a location, i.e., a location fix.

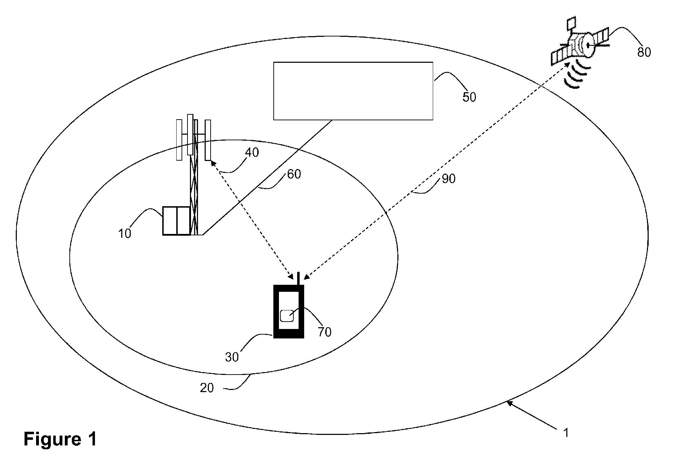

**Figure 1** depicts a **wireless communications network 1**, in which embodiments herein may be implemented. The wireless communications network 1 may for example be a network such as a Long-Term Evolution (LTE), e.g. LTE Frequency Division Duplex (FDD), LTE Time Division Duplex (TDD), LTE Half-Duplex Frequency Division Duplex (HD-FDD), Wideband Code Division Multiple Access (WCDMA), Universal Terrestrial Radio Access (UTRA) TDD, Global System for Mobile communications (GSM) network, GSM/Enhanced Data Rate for GSM Evolution (EDGE) Radio Access Network (GERAN) network, EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, Worldwide Interoperability for Microwave Access (WiMax), or any cellular network or system. Wireless communications network 100 may be a heterogeneous network, or a homogeneous network.

The wireless communications network 1 comprises a **base station 10.** The base station 10 may be, for example, an eNB, eNodeB, or a Home Node B, a Home eNode B, femto Base Station, BS, pico BS or any other network unit capable to serve a device or a machine type communication device in the wireless communications network 1. In some particular embodiments, the base station 10 may be a stationary relay node or a mobile relay node. The wireless communications network 1 covers a geographical area which is divided into cell areas, wherein each cell area is served by a base station 10, although, one base station 10 may serve one or several cells. In the example depicted in Figure 1, the base station 10 serves a **cell 20.** The base station 10 may be of different classes, such as e.g. macro eNodeB, home eNodeB or pico base station, based on transmission power and thereby also cell size. Typically, wireless communications network 1 may comprise more cells similar to cell 20, served by their respective base stations 10. This is not depicted in Figure 1 for the sake of simplicity. The base station 10 may support one or several communication technologies, and its name may depend on the technology and terminology used.

A number of wireless devices are located in the wireless communications network 1. In the example scenario of Figure 1, only one wireless device is shown, **wireless device 30.** The wireless device 30 may e.g. communicate with the base station 10 over a **radio link 40.**

The wireless device 30 is a wireless communication device such as a user equipment (UE), which is also known as e.g. mobile terminal, wireless terminal and/or mobile station. The device is wireless, i.e., it is enabled to communicate wirelessly in the wireless communications network 1, sometimes also referred to as a cellular radio system or cellular network. The communication may be performed e.g., between two devices, between a device and a regular telephone and/or between a device and a server. The communication may be performed e.g., via a Radio Access Network (RAN) and possibly one or more core networks, comprised within the wireless network.

The wireless device 30 may further be referred to as a mobile telephone, cellular telephone, or laptop with wireless capability, just to mention some further examples. The wireless device 30 in the present context may be, for example, portable, pocket-storable, hand-held, computer-comprised, or vehicle-mounted mobile devices, enabled to communicate voice and/or data, via the RAN, with another entity, such as a server, a laptop, a Personal Digital Assistant (PDA), or a tablet computer, sometimes referred to as a surf plate with wireless capability, Machine-to-Machine (M2M) devices, devices equipped with a wireless interface, such as a printer or a file storage device or any other radio network unit capable of communicating over a radio link in a cellular communications system. This is not depicted in Figure 1.

In 3GPP LTE, base stations such as base station 10, which may be referred to as eNodeBs or even eNBs, may be directly connected to one or more core networks, each comprising one or more core network nodes, such as **core network node 50.** The core network node 50 may be for example, a "centralized network management node" or "coordinating node", which is a core network node, which coordinates radio resources with one or more network nodes and/or wireless devices, such as wireless device 30. Some examples of the coordinating node are network monitoring and configuration node, Operations Support System (OSS) node, Operations & Maintenance (O&M) node, Minimization of Drive Tests (MDT) node, Self-Organizing Network (SON) node, positioning node, a gateway node such as Packet Data Network Gateway (P-GW) or Serving Gateway (S-GW) network node or femto gateway node, a Mobility Management Entity (MME) node, a macro node coordinating smaller radio nodes associated with it, etc.

The base station 10 may communicate with core network node 50 via a **link 60.**

The term **network node 10, 30, 50** is used herein to refer to any of the base station 10, the wireless device 30 and the core network node 50, unless otherwise noted.

The wireless device 30 comprises a **satellite-based positioning system 70.** In some embodiments, the satellite-based positioning system 70 may be a Global Navigation Satellite System (GNSS). In some further particular embodiments, the satellite-based positioning system 70 may be one of: Global Positioning System (GPS), GLONASS, Galileo, IRNSS, and Compass. These examples are not limiting since, as one of skill in the art will recognize, other the satellite-based positioning systems 70 are possible. The satellite-based positioning system 70 is in communication with at least one **satellite 80** located high above Earth, via a **radio link 90.**

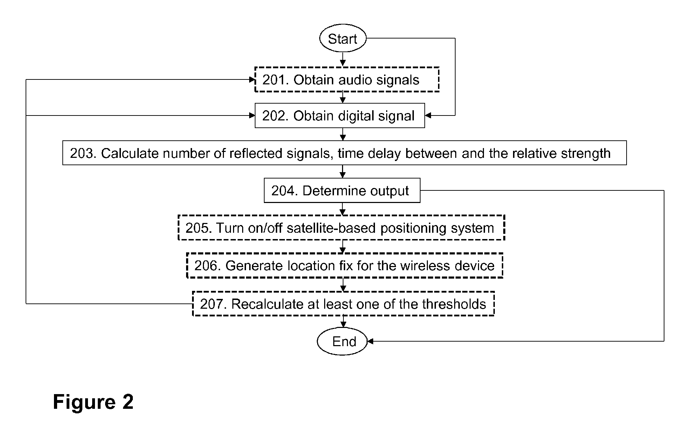

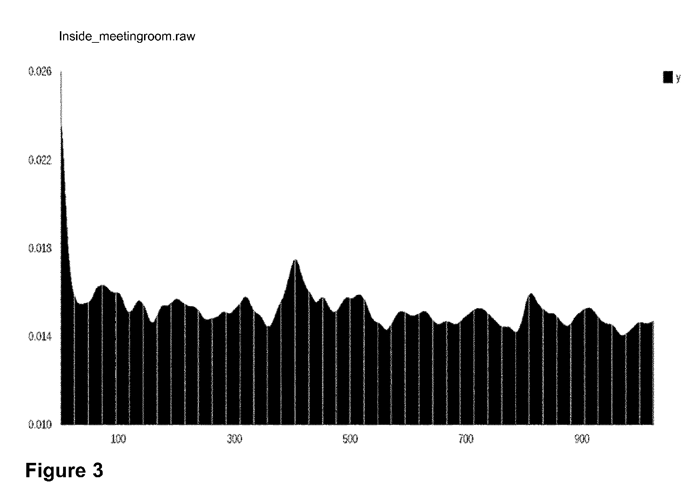

Embodiments of a method performed by the network node 10, 30, 50 for determining an output relating to a satellite-based positioning system 70 in the wireless device 30, will now be described with reference to the flowchart depicted depicted in **Figure 2** and the schematic diagrams depicted in Figures **3-4****.** The network node 10, 30, 50 and the wireless device 30 operate in the wireless communications network 1. Figure 2 depicts a flowchart of the actions that are or may be performed by the network node 10, 30, 50 in embodiments herein. Discontinued lines depict optional actions. A continuous line depicts a mandatory action.

The method may comprise the following actions, which actions may as well be carried out in another suitable order than that described below. In some embodiments, all the actions may be carried out, whereas in other embodiments only some action/s may be carried out. It should be noted as well, that the embodiments described below may be used one at a time, or together in any combination of two or more embodiments, whenever suitable.

As stated earlier, in some embodiments, the satellite-based positioning system 70 is a Global Navigation Satellite System, GNSS, such as GPS, GLONASS, Galileo, IRNSS, and Compass.

### Action 201

In order to use audio signals to be able to determine whether or not the satellite-based positioning system 70 can get access to satellite signals to generate a location of the wireless device 30, e.g., in order to determine if the wireless device 30 is in a satellite signal hampered environment, e.g., indoors, or in a satellite signal non-hampered environment, e.g., outdoors, in some embodiments, the network node 30 may obtain audio signals in the environment of the wireless device 30. In some embodiments, such as when the network node 10, 30, 50 is the wireless device 30, as described above, the network node 30 may obtain the audio signals by recording the audio signals itself. For example, the wireless device 30 may record the audio signals, i.e., the ambient sound, with its own microphone.

The environment of the wireless device 30 may be the distance wherein the wireless device 30 is capable of recording the audio signals. This may vary from wireless device 30 to wireless device 30, and may also depend on e.g., the loudness of the original sound, and on the sound obstructing structures in the environment. For example, the environment of the wireless device 30 may be a radius of up to 25 m surrounding the wireless device 30.

The sound waves from a sound source may travel both along an unreflected path, which is the shortest way, and along a reflected path. Thus, the audio signals comprise the one or more original signals and the one or more reflected signals. Each of the one or more reflected signals corresponds to a respective original signal of the one or more original signals. In some embodiments, the one or more original signals are the sound travelling along the unreflected path, and the one or more reflected signals are the sound travelling along the reflected path. In other embodiments, however, there may be no obtained unreflected signal. In these embodiments, the one or more original signals are the first received sound travelling along the shortest path, and the one or more reflected signals are the remaining sound or sounds travelling along the reflected path. The microphone in the wireless device 30 may record the sound pressure from both signal paths, and superimpose them in the recorded signal.

Action 201 is optional.

### Action 202

In order to determine whether or not the satellite-based positioning system 70 can get access to satellite signals to generate a location of the wireless device 30, e.g., in order to determine if the wireless device 30 is in a satellite signal hampered environment, e.g., indoors, or in a satellite signal non-hampered environment, e.g., outdoors, the network node 10, 30, 50 may analyze the audio signals in the environment of the wireless device 30. This analysis is performed by one or more computer processors, and therefore, the audio signals in the environment of the wireless device 30 may be converted to a digital signal. Thus, in this action, the network node 10, 30, 50 obtains the digital signal based on obtained audio signals in the environment of the wireless device 30, such as the obtained audio signals in Action 201. As stated earlier, the audio signals comprise the one or more original signals and the one or more reflected signals. Each of the one or more reflected signals corresponds to the respective original signal of the one or more original signals.

In some embodiments, such as when the network node 10, 30, 50 is the wireless device 30, obtaining the digital signal may comprise producing the digital signal. This may be implemented for example, by having an Analog to Digital Converter (ADC) in the wireless device 30 sample the continuous voltage signal generated by the microphone recording the audio signal, i.e., in the wireless device 30, and produce the digital signal. The digital signal from the ADC may then be stored in a buffer and autocorrelation may be used to find reflections in the digital signal. In some embodiments wherein the network node 10, 50 is not the wireless device 30, the wireless device 30 that has produced the digital signal may then send the produced digital signal to the network node 10, 50.

In these later embodiments, the network node 10, 30, 50 obtains the digital signal by receiving the digital signal from another network node 10, 30, 50, in the wireless communications network 1, such as the wireless device 30. This may be implemented for example, by sending a message including a data container with the recorded digital signals.

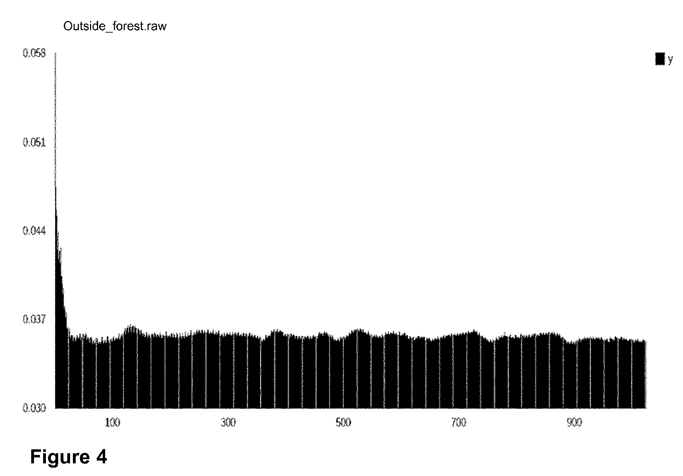

Figures 3 and 4 show two examples of the output from recordings after auto correlation with a microphone in an example of wireless device 30, a smartphone. In both figures, the X axis represents time, although since the speed of sound is known, it may also be interpreted as distance. The Y axis represents how similar the signal is to itself at that point in time.

In Figure 3, a conversation in a meeting room has been sampled and saved as "Inside_meetingroom.raw". The audio reflections are shown as peaks in the diagram. The distance on the X axis to a peak shows the additional distance the reflected audio had to travel to reach the microphone. In Figure 4, the samples are taken outdoors and saved as "Outside_forest.raw", in a forest. No peaks are clearly visible since there has been no reflection before the audio reaches the microphone.

### Action 203

In order to analyze the audio signals in the environment of the wireless device 30 to determine whether or not the satellite-based positioning system 70 can get access to satellite signals to generate a location of the wireless device 30, the network node 10, 30, 50 calculates, based on the obtained digital signal, values for: a number of reflected signals in the audio signals, and, for each reflected signal of the number of reflected signals: a time delay between an original signal of the number of one or more original signals corresponding to the reflected signal, and the reflected signal, and a relative strength of the reflected signal in comparison with the original signal of the number of one or more original signals corresponding to the reflected signal. In some embodiments, the calculated values may be referred to as input lines, or input, I1, I2 and I3, respectively.

The number of reflected signals may be counted by identifying the most significant peaks in, for example, graphs such as that of Figure 3.

The time delay may be measured in, e.g., milliseconds.

The relative strength of the reflected signal in comparison with the original signal may be expressed as a percentage of the original signal.

The calculation of the values performed by the network node 10, 30, 50 in this actions may be implemented, for example, by well-known autocorrelation methods based on discrete convolution.

### Action 204

In order to determine whether or not the satellite-based positioning system 70 can get access to satellite signals to generate a location of the wireless device 30, the network node 10, 30, 50 determines an output based on the calculated values. The output comprises whether or not the satellite-based positioning system 70 can get access to satellite signals to generate a location of the wireless device 30. The satellite signals may originate in one or more satellites above Earth, such as satellite 80. For example, in the embodiments in which the satellite-based positioning system 70 is GPS, the satellite signals may originate from at least four satellites above Earth, each such as satellite 80.

In some embodiments, the network node 10, 30, 50 may determine the output by comparing the values calculated in the previous action, i.e., I1, I2 and I3, with a first, second and third threshold, respectively. In these embodiments, the first threshold is a signal strength threshold, the second threshold is a threshold of number of reflected signals, and the third threshold is a delay time threshold. In these embodiments, these comparisons lead to the output, e.g. output signal, (O).

In some embodiments, the network node 10, 30, 50 may determine the output by calculating a binary signal, i.e., a yes/no signal, indicating that it is likely that the satellite-based positioning system 70, e.g., GPS, can get access to satellite signals to generate a location fix, or not. For this calculation, the network node 10, 30, 50 may use the obtained digital signal, and the first, second and third thresholds, and use this data in the following way. If the digital signal contains X number of reflections with a signal strength higher than the first threshold, and X is equal or larger than the corresponding second threshold, and that at least one of these reflections has a delay time less than the corresponding third threshold, then the output may be set to indicate that the satellite-based positioning system 70 will fail to get a location fix. In all other cases, the output may be set to indicate that the satellite-based positioning system 70 will be able to get a location fix.

Thus, if a) the digital signal comprises a first number of reflected signals with a signal strength higher than a first threshold, b) the number of reflected signals is equal or larger than a second threshold, and c) a second number of reflected signals has a delay time lower than a third threshold, then the output is that the satellite-based positioning system 70 cannot get access to the satellite signals. Else, the output is that the satellite-based positioning system 70 can get access to the satellite signals.

In some embodiments, the first, second and third thresholds are obtained. The network node 10, 30, 50 may obtain the first, second and third thresholds, also referred to herein as T1, T2 and T3, respectively, by receiving them from another network node 10, 30, 50, or by the network node 10, 30, 50 generating the first, second and third thresholds.

The values of the first, second and third thresholds may be determined empirically, as one of skill in the art will appreciate.

For example, if a) the digital signal comprises a first number of reflected signals with a signal strength higher than 60 percent, b) the number of reflected signals is equal or larger than 3, and c) a second number of reflected signals has a delay time lower than 10 milliseconds, then, in these embodiments, the output is that the satellite-based positioning system 70 cannot get access to the satellite signals. Else, the output is that the satellite-based positioning system 70 can get access to the satellite signals.

In other embodiments, the network node 10, 30, 50 may determine the output by calculating a signal that is not necessarily binary, but that may have more categories, each corresponding to different ranges of output values obtained. For example, in some embodiments, this signal may be for example, a yes/no/maybe signal. "Yes" may correspond to those output values that will most likely result in a successful access to the satellite signals. "No" may correspond to those output values that will most likely result in a failed access to the satellite signals. "Maybe" may correspond to those output values for which access to the satellite signals cannot be predicted with certainty. That is, for those output values that result in a similar proportion of successful accesses and failures to access the satellite signals.

In yet other examples, there may be additional categories, each corresponding to different success rates of access or failures to the satellite signals.

### Action 205

Depending on the value of the output, the network node 10, 30, 50 may either draw the conclusion that it is meaningful to try to power on and boot up the controller of the satellite-based positioning system 70, e.g., GPS, for it to generate a location fix, i.e, to determine the location of the wireless device 30, or it may conclude that there is no meaning in trying to do so, as the satellite-based positioning system 70 may not succeed in accessing the satellite signals.

Thus, in this action, the network node 10, 30, 50 may turn on the satellite-based positioning system 70 if the output is that the satellite-based positioning system 70 can get access to the satellite signals to generate the location for the wireless device 30, and it may turn off the satellite-based positioning system 70 if the output is that the satellite-based positioning system 70 cannot get access to the satellite signals to generate the location of the wireless device 30.

In some of these embodiments, the network node 10, 30, 50 is the wireless device 30, and may therefore turn on or off the satellite-based positioning system 70 itself. In other embodiments wherein the network node 10, 50 is not the wireless device 30, the network node 10, 50 may therefore instruct the wireless device 30 to turn on or off the satellite-based positioning system 70 in the wireless device 30. This may be implemented, for example, by sending a first Control signal (C). For example, the first Control signal (C) may be "ON/OFF" signal.

This is an optional action.

### Action 206

In this action, when the output is that the satellite-based positioning system 70 can get access to the satellite signals, the network node 10, 30, 50 may generate the location of the wireless device 30 with the satellite-based positioning system 70.

In some of these embodiments, the network node 10, 30, 50 is the wireless device 30, and it may therefore generate the location of the wireless device 30 itself with the satellite-based positioning system 70. In other embodiments wherein the network node 10, 50 is not the wireless device 30, the network node 10, 50 may therefore generate the location of the wireless device 30 by instructing the wireless device 30 to generate the location of the wireless device 30 with the satellite-based positioning system 70.

In some embodiments the network node 10, 30, 50 may generate the location of the wireless device 30 with the satellite-based positioning system 70 by signalling to the satellite- based positioning system 70, e.g., a GPS controller, to get a location fix. This may be implemented, for example, by sending a second Control signal (C). In some particular embodiments the second control signal (C) may be comprised in the first control signal (C).

### Action 207

In the embodiments in which the network node 10, 30, 50 signaled to the satellite-based positioning system 70, e.g., the GPS controller, to get a location fix, the satellite-based positioning system 70 , e.g., the GPS controller, may then provide a signal (S) back to the network node 10, 30, 50 comprising whether it succeeded or not. The network node 10, 30, 50 may then use this feedback, together with the data used by the network node 10, 30, 50, and all older such data that it has saved, to refine the first, second and third thresholds with a recalculation of these thresholds.

In this action, the network node 10, 30, 50 may recalculate at least one of the obtained thresholds. This is so that, when the output of the determining step is that the satellite-based positioning system 70 can get satellite access to generate a location, the wireless device 30 succeeds at getting a location with the satellite-based positioning system 70, and when the output of the determining step is that the satellite-based positioning system 70 cannot get satellite access to generate a location, the wireless device 30 does not succeed at getting a location with the satellite-based positioning system 70, with a determined prediction rate.

In the embodiments in which these thresholds always generate the correct behavior, which may be only a few, the thresholds may remain unchanged. But, as there may be incorrect cases, i.e., cases in which the satellite-based positioning system 70 controller is activated, but it fails to generate a location fix for the wireless device 30, at some points, network node 10, 30, 50, may have to try to refine the thresholds. To do this, it may have old sets of data that have been saved. In some embodiments, such a set of data may consist of DX = {I1, I2, I3, T1, T2, T3, O, S}, as defined earlier, for the occasion X. In other embodiments, such a set of data may consist of DX = {I1, I2, I3, T1, T2, T3, C, S}. yet in other embodiments, such a set of data may consist of DX = {I1, I2, I3, T1, T2, T3, O, C, S}.

The network node 10, 30, 50, may then, for each data set DX, replace the old thresholds with the new set, apply the input I1, I2, I3 and the new thresholds, determine its new output (O), and compare that to the old S signal. It may go through all saved data set like this, changing the threshold signals for each iteration, until the S to O comparison succeeds over a certain rate, then these will be the new thresholds.

Sets of data, also referred to herein as DX, may only be available for the cases where the signal O leads to an attempt to get a location fix, as it may be only in these cases the signal S is sent back from the satellite-based positioning system 70 controller. To also get some sets of data DX for the case that the satellite-based positioning system 70 controller should not be started, the network node 10, 30, 50 may randomly select a few cases when it signals to the satellite-based positioning system 70 controller to get a fix also in these cases, and record the returned S signal. To collect data for cases like this, the network node 10, 30, 50 may trigger a run when it gets a signal from the wireless device 30 that the wireless device 30 is being charged. Starting the satellite-based positioning system 70 then does not draw any "survival critical" current from the battery, and it is likely to be a case when the satellite-based positioning system 70 may not succeed in getting a location fix. Recalculating the thresholds is also preferably, at least in some embodiments, done during charging, as the likelihood that a "real" run may be needed is low.

Below follows a description of one way new threshold values may be recalculated in some embodiments.

For this calculation the dependency between the input and output of the network node 10, 30, 50 may need to be considered, the terms Outdoor/Indoor may be used to denote Good/Bad satellite based positioning system 70 accessibility conditions:
Input number of reflections:
   Increasing -> Indoor ; Decreasing->Outdoor
Input reflection strength:
   Increasing -> Indoor ; Decreasing->Outdoor
Input reflection delay:
   Increasing -> Outdoor ; Decreasing->Indoor

Thus, in some embodiments, the network node 10, 30, 50 may recalculate based on an input number of reflections, an input reflection strength of the reflections and an input reflection delay of the reflections. As described above, the input number of reflections, the input reflection strength of the reflections and the input reflection delay of the reflections may be an input number of reflections, an input reflection strength of the reflections and an input reflection delay of the reflections, i.e. I1, I2, I3, calculated as described earlier in Action 203, at one or more specific occasions X. That is, the input number of reflections, the input reflection strength of the reflections and the input reflection delay of the reflections may be an old set of data that has been saved. In some embodiments, the reflections may be the same as the one or more reflected signals mentioned earlier, e.g., in Action 201. In these embodiments, the input number of reflections, the input reflection strength of the reflections and the input reflection delay of the reflections, is the same as those calculated in Action 203.

In other embodiments, the reflections may be a larger set of one or more reflected signals than those mentioned in e.g., Action 201. In these other embodiments, the input number of reflections, the input reflection strength of the reflections and the input reflection delay of the reflections, may comprise those values calculated in Action 203 and additional corresponding values calculated at other occasion/s X.

The recalculation performed in this Action may be the result of the fraction of incorrect predictions having become too large. These incorrect predictions may be of two types:
1. Outdoor false, produces Outdoor signal when it should have been Indoor.
2. Indoor false, produces Indoor signal when it should have been Outdoor.

In case of 1., the threshold values may be adjusted in the directions shown below.
First threshold - reflection strength -> Decrease
Second threshold - number of reflections ->Decrease
Third threshold - reflection delay -> Increase

In case of 2., the threshold values may be adjusted in the directions shown below.
First threshold - reflection strength -> Increase
Second threshold- number of reflections -> Increase
Third threshold - reflection delay -> Decrease

The understanding of the relationships described above may be used to formulate an algorithm for how to change the three thresholds, in order to find new values that result in an improved prediction rate. In some embodiments, the algorithm assumes that the network node 10, 30, 50 has saved data from previous runs, that may now be used as "training" data to evaluate the changes, and that it has also saved information making it possible to select the subset of failed computations within this training set.

The following algorithm is described in a Python-like notation. T denotes Threshold. Param denotes parameter, and #failures denotes number of failures.

Starting with existing Number of refl T2, i.e., the number of reflections threshold or second threshold, and changing one for each iteration X:

```
       Change Refl strength T1, i.e., the reflection strength threshold or first threshold,
       so that it passes X "nearest" failed param value in set of failed computations.
       Check #failures in training set.
       If improved:
         Quit
       Else:
         Change Refl delay T3, i.e., the time delay threshold or third threshold, so that it
         passes X "nearest" failed param value in set of failed computations.
         Check #failures in training set.
         If improved:
            Quit
         Else:
           Apply both changes above
            Check #failures in training set.
            If improved:
              Quit
```

This algorithm is an example that may be modified in many ways, e.g., to have an inner loop where the first and third thresholds, i.e., reflection strength/delay, go through several change levels before the second threshold, i.e., the threshold Number of reflections, is changed in the outer loop.

The network node 10, 30, 50 may then monitor the success rate of the predictions calculated by comparing these with the status signal (S) that it may receive in the cases that the satellite-based positioning system 70, e.g., the satellite-based positioning system 70 controller, is started. When the success rate drops below some level, the network node 10, 30, 50 may decide to use saved data to calculate a new model parameter matrix using the saved data from the X latest runs. This calculation may preferably be performed when the wireless device 30 is being charged.

Further advantages of some embodiments disclosed herein are discussed below.

Wireless devices 30 performing Opportunistic Sensing, may track and report their position for a considerably longer time with more power efficient positioning.

The information about the wireless device 30 being in a satellite signal hampered environment, e.g., indoors, or in a satellite signal non-hampered environment, e.g., outdoors, may be of interest to other entities than the satellite-based positioning system 70 to be used for other purposes, e.g. the Google Now app.

In scenarios where it is desirable to turn the satellite-based positioning system 70 on as soon as it is possible, e.g., after it leaves a satellite signal hampered environment, e.g., indoors for a satellite signal non-hampered environment, e.g., outdoors, it is advantageous to use an audio system-based method such as that described herein, as the audio system is one of the least power consuming systems. And it may be always on for carrying out other audio related tasks, so then the cost may be even lower. That is, instead of having the wireless device 30 turn on the satellite based positioning system 70 on regular intervals to try to get a location fix, the audio system may be turned on all the time and may be able to decide when it is worth trying to turn on the satellite based positioning system 70 again.

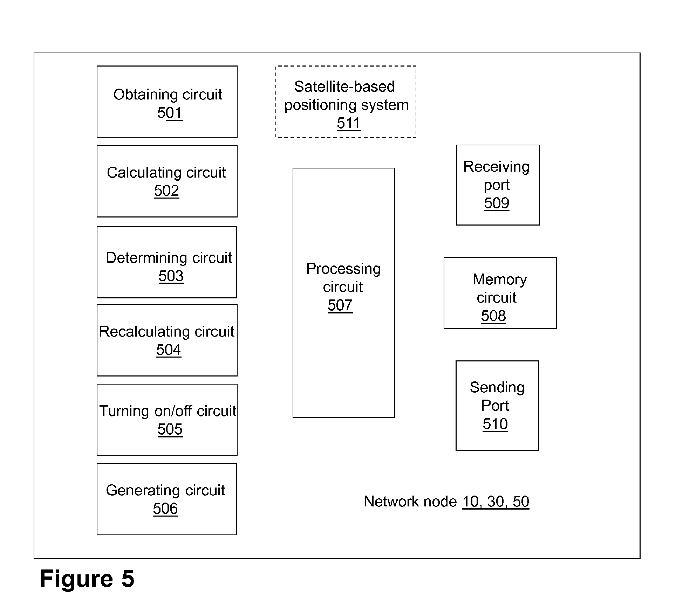

To perform the method actions in the network node 10, 30, 50 described above in relation to Figures 2-4 for determining an output relating to a satellite based positioning system 70 in a wireless device 30, the network node 10, 30, 50 comprises the following arrangement depicted in **Figure 5****.** The network node 10, 30, 50 and the wireless device 30 are adapted to operate in the wireless communications network 1. Some details regarding to the implementation carried out by the network node 10, 30, 50 described above in relation to Figures 2-4 also apply to this arrangement of the network node 10, 30, 50, and are therefore not repeated here for the sake of simplicity. However, it is understood that the network node 10, 30, 50 is configured to carry out the method actions, as described above, in their entirety.

The network node 10, 30, 50 comprises an **obtaining circuit 501** configured to obtain the digital signal based on the obtained audio signals in the environment of the wireless device 30. The audio signals comprise the one or more original signals and the one or more reflected signals. Each of the one or more reflected signals corresponds to the respective original signal of the one or more original signals.

In some embodiments, the obtaining circuit 501 is further configured to obtain the first, second and third thresholds. Thus, in some embodiments, the first, second and third thresholds are obtained.

In some embodiments, the obtaining circuit 501 may be further configured to obtain the audio signals in the environment of the wireless device 30. In some embodiments, such as when the network node 10, 30, 50 is the wireless device 30, as described above, the obtaining circuit 501 may be further configured to record the audio signals.

The network node 10, 30, 50 also comprises a **calculating circuit 502** configured to calculate, based on the obtained digital signal, values for: the number of reflected signals in the audio signals, and, for each reflected signal of the number of reflected signals: the time delay between the original signal of the number of one or more original signals corresponding to the reflected signal, and the reflected signal, and the relative strength of the reflected signal in comparison with the original signal of the number of one or more original signals corresponding to the reflected signal.

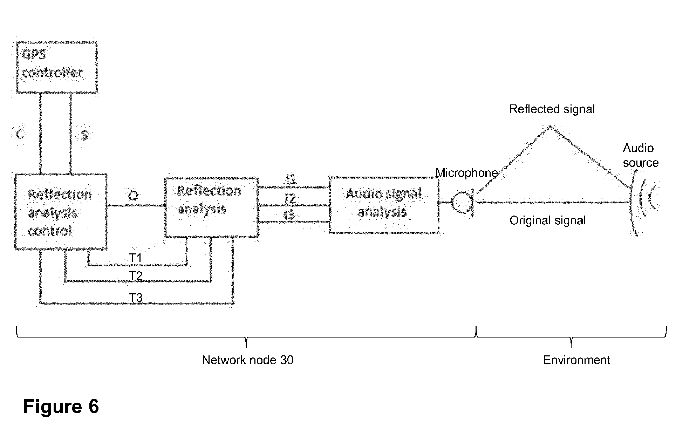

In some embodiments, such as the example depicted in Figure 6, the obtaining circuit 501, and the calculating circuit 502 may be collectively referred to as Audio signal analysis block, depicted as "Audio signal analysis".

The network node 10, 30, 50 further comprises a **determining circuit 503** configured to determine the output based on the calculated values. The output comprises whether or not the satellite based positioning system 70 can get access to satellite signals to generate the location of the wireless device 30.

In some embodiments, if: a) the digital signal comprises a first number of reflected signals with a signal strength higher than the first threshold, b) the number of reflected signals is equal or larger than the second threshold, and c) a second number of reflected signals has a delay time lower than the third threshold, the output is configured to be that the satellite-based positioning system 70 cannot get access to the satellite signals. Else, the output is configured to be that the satellite-based positioning system 70 can get access to the satellite signals.

In some embodiments, such as the example depicted in Figure 6, the determining circuit 503 may be referred to as Reflection analysis block, depicted as "Reflection analysis".

In some embodiments, the network node 10, 30, 50 may further comprise a **recalculating circuit 504** configured to recalculate at least one of the obtained thresholds so that, when the output of the determining step is that the satellite-based positioning system can get satellite access to generate a location, the wireless device 30 succeeds at getting the location with the satellite-based positioning system, and when the output of the determining step is that the satellite-based positioning system cannot get satellite access to generate the location, the wireless device 30 does not succeed at getting the location with the satellite-based positioning system, with a determined prediction rate.

In some embodiments, the recalculating circuit 504 is configured to recalculate based on the input number of reflections, the input reflection strength of the reflections and the input reflection delay of the reflections.

In some embodiments, such as the example depicted in Figure 6, the recalculating circuit 504 may be referred to as Reflection analysis control block, depicted as "Reflection analysis control".

In some embodiments, the network node 10, 30, 50 may comprise a **turning on circuit 505** configured to turn on the satellite-based positioning system 70 if the output is that the satellite-based positioning system 70 can get access to the satellite signals to generate the location for the wireless device 30, and a **turning off circuit 505** configured to turn off the satellite-based positioning system 70 if the output is that the satellite-based positioning system 70 cannot get access to the satellite signals to generate the location of the wireless device 30.

In some embodiments, the network node 10, 30, 50 may comprise a **generating circuit 506** configured to generate the location of the wireless device 30 when the satellite-based positioning system 70 can get access to the satellite signals with the satellite-based positioning system 70.

In some embodiments, the turning on circuit 505, turning off circuit 505 and the generating circuit 506 may be collectively referred to as the satellite-based positioning system 70 controller. In the particular example depicted in Figure 6, the Satellite-based positioning system 70 controller is a GPS controller, depicted as "GPS controller".

In some embodiments, the satellite-based positioning system 70 is a Global Navigation Satellite System, GNSS.

As stated earlier, in some embodiments, the network node 10, 30, 50 may be the wireless device 30.

The embodiments herein for determining an output relating to a satellite based positioning system 70 in a wireless device 30 may be implemented through one or more processors, such as a **processing circuit 507** in the network node 10, 30, 50 depicted in Figure 5, together with computer program code for performing the functions and actions of the embodiments herein. The program code mentioned above may also be provided as a computer program product, for instance in the form of a data carrier carrying computer program code for performing the embodiments herein when being loaded into the in the network node 10, 30, 50. One such carrier may be in the form of a CD ROM disc. It may be however feasible with other data carriers such as a memory stick. The computer program code may furthermore be provided as pure program code on a server and downloaded to the network node 10, 30, 50.

The network node 10, 30, 50 may further comprise a **memory circuit 508** comprising one or more memory units. The memory circuit 508 may be arranged to be used to store data in relation to applications to perform the methods herein when being executed in the network node 10, 30, 50. Memory circuit 508 may be in communication with the processing circuit 507. Any of the other information processed by the processing circuit 507 may also be stored in the memory circuit 508.

In some embodiments, information may be received through a **receiving port 509.** In some embodiments in which the network node 10, 30 is a radio network node 10, 30, the receiving port 509 may be, for example, connected to the one or more antennas in the network node 10, 30. In other embodiments, the network node 10, 30, 50 may receive information from another structure in the wireless communications network 1 through the receiving port 509. Since the receiving port 509 may be in communication with the processing circuit 507, the receiving port 509 may then send the received information to the processing circuit 507. The receiving port 509 may also be configured to receive other information.

The information processed by the processing circuit 507 in relation to the embodiments of method herein may be stored in the memory circuit 508 which, as stated earlier, may be in communication with the processing circuit 507 and the receiving port 509.

The processing circuit 507 may be further configured to transmit information, another node in the wireless communications network 1, through **a sending port 510,** which may be in communication with the processing circuit 507, and the memory circuit 508.

In the embodiments in which the network node 10, 30, 50 is the wireless device 30, the network node 30 may further comprise the **satellite-based positioning system 511,** which may comprise, for example, a satellite-based positioning system 511 controller (not depicted).

Those skilled in the art will also appreciate that the different circuits 501-510 described above may refer to a combination of analog and digital circuits, and/or one or more processors configured with software and/or firmware (e.g., stored in memory) that, when executed by the one or more processors such as the processing circuit 507, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Thus, the methods according to the embodiments described herein for the network node 10, 30, 50 are respectively implemented by means of a computer program product, comprising instructions, i.e., software code portions, which, when executed on at least one processor, cause the at least one processor to carry out the actions described herein, as performed by the network node 10, 30, 50. The computer program product may be stored on a computer-readable storage medium. The computer-readable storage medium, having stored thereon the computer program, may comprise the instructions which, when executed on at least one processor, cause the at least one processor to carry out the actions described herein, as performed by the network node 10, 30, 50. In some embodiments, the computer-readable storage medium may be a non-transitory computer-readable storage medium.

**Figure 6** is a schematic representation of an example of one of the embodiments of the method and apparatus described herein in relation to Figures 2-5, in which the network node 10, 30, 50 is the wireless device 30, and wherein the satellite based positioning system 70 is a GPS comprising a GPS controller. As depicted in the Figure, the audio signal analysis block uses a microphone to record the ambient sound of the network node 30 coming from one or more audio sources. The sound waves from a sound source may, as shown in the Figure, travel both along an unreflected path, which is the shortest way , and along a reflected path. The waves travelling along the unreflected path may correspond in some embodiments, as described above, to the one or more original signals. The waves travelling along the reflected path may correspond in some embodiments, as described above, to the one or more reflected signals. The microphone may record the sound pressure from both signal paths, and superimpose them in the recorded signal. The Audio signal analysis block will calculate three parameters: the number of reflected signals in the audio signals, and, for each reflected signal of the number of reflected signals: the time delay between the original signal of the number of one or more original signals corresponding to the reflected signal, and the reflected signal, and the relative strength of the reflected signal in comparison with the original signal of the number of one or more original signals corresponding to the reflected signal.

This data is then provided as input to the Reflection analysis block over the input lines, i.e., I1, I2, I3. The reflection analysis block may receive these inputs, e.g., signals, from the Audio signal analysis block, and compare them, respectively, to the three thresholds T1, T2, T3 it may have received from the Reflection analysis control block. The Reflection analysis control block may have, in some embodiments, generated the three thresholds and may then have sent them to the Reflection analysis block. This comparison may lead to the output signal (O), e.g., the binary output signal (O), that may then become input to the Reflection analysis control block. Depending on the value of this signal, the Reflection analysis control block may either draw the conclusion that it is meaningful to try to power on and boot up the GPS controller for it to generate a GPS location fix via, for example, the first control signal (C), or it will conclude that there is no meaning in trying to do so as the GPS may not succeed in accessing the satellite signals.

For the case that the Reflection analysis control block may have signaled to the GPS controller to get a location fix via, for example, the second control signal (C), the GPS controller may then provide a signal back (S) to the Reflection analysis control block whether it succeeded or not. The Reflection analysis control block may then use this feedback, together with the data used by the Reflection analysis block, and all older such data that it has saved, to refine the set point signals it may provide to the Reflection analysis block.

The communication or signalling between the different blocks represented on Figure 6, may be extrapolated to the other embodiments not depicted in Figure 6 for the sake of simplicity, as suitable. Such may be embodiments wherein the network node 10, 50 is not a wireless device 30.

When using the word "comprise" or "comprising" it shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention.

## Claims

1. A method performed by a network node (10, 30, 50) for determining an output relating to a satellite-based positioning system (70) in a wireless device (30), the network node (10, 30, 50) and the wireless device (30) operating in a wireless communications network (1), the method comprising:
*obtaining* (202) a digital signal based on obtained audio signals in the environment of the wireless device (30), the audio signals comprising one or more original signals and one or more reflected signals, wherein each of the one or more reflected signals corresponds to a respective original signal of the one or more original signals,
*calculating* (203), based on the obtained digital signal, values for:
- a number of reflected signals in the audio signals, and,
- for each reflected signal of the number of reflected signals:
○ a time delay between an original signal of the number of one or more original signals corresponding to the reflected signal, and the reflected signal, and
○ a relative strength of the reflected signal in comparison with the original signal of the number of one or more original signals corresponding to the reflected signal,
*determining* (204) an output based on the calculated values, the output comprising whether or not the satellite-based positioning system (70) can get access to satellite signals to generate a location of the wireless device (30).

2. The method of claim 1, wherein, if:
- the digital signal comprises a first number of reflected signals with a signal strength higher than a first threshold,
- the number of reflected signals is equal or larger than a second threshold, and
- a second number of reflected signals has a delay time lower than a third threshold,
the output is that the satellite-based positioning system (70) cannot get access to the satellite signals,
else, the output is that the satellite-based positioning system (70) can get access to the satellite signals.

3. The method of any of claims 1-2, wherein the first, second and third thresholds are obtained, and wherein the method further comprises *recalculating* (207) at least one of the obtained thresholds so that, when the output of the determining step is that the satellite-based positioning system (70) can get satellite access to generate a location, the wireless device (30) succeeds at getting a location with the satellite-based positioning system (70), and when the output of the determining step is that the satellite-based positioning system (70) cannot get satellite access to generate a location, the wireless device (30) does not succeed at getting a location with the satellite-based positioning system (70), with a determined prediction rate.

4. The method of any of claims 1-3, wherein the recalculating (207) is based on an input number of reflections, an input reflection strength of the reflections and an input reflection delay of the reflections.

5. The method of any of claims 1-4, wherein the network node (10, 30, 50) is the wireless device (30).

6. The method of claim 5, further comprising:
*turning on* (205) the satellite-based positioning system (70) if the output is that the satellite-based positioning system (70) can get access to the satellite signals to generate the location for the wireless device (30), and
*turning off* (205) the satellite-based positioning system (70) if the output is that the satellite-based positioning system (70) cannot get access to the satellite signals to generate the location of the wireless device (30).

7. The method of any of claims 5-6 further comprising:
*generating* (206), with the satellite-based positioning system (70), the location of the wireless device (30) when the output is that the satellite-based positioning system (70) can get access to the satellite signals.

8. A network node (10, 30, 50) for determining an output relating to a satellite-based positioning system (70) in a wireless device (30), the network node (10, 30, 50) and the wireless device (30) being adapted to operate in a wireless communications network (1), the network node (10, 30, 50) comprising:
an obtaining circuit (501) configured to obtain a digital signal based on obtained audio signals in the environment of the wireless device (30), the audio signals comprising one or more original signals and one or more reflected signals, wherein each of the one or more reflected signals corresponds to a respective original signal of the one or more original signals,
a calculating circuit (502) configured to calculate, based on the obtained digital signal, values for:
- a number of reflected signals in the audio signals, and,
- for each reflected signal of the number of reflected signals:
○ a time delay between an original signal of the number of one or more original signals corresponding to the reflected signal, and the reflected signal, and
○ a relative strength of the reflected signal in comparison with the original signal of the number of one or more original signals corresponding to the reflected signal,
a determining circuit (503) configured to determine an output based on the calculated values, the output comprising whether or not the satellite-based positioning system (70) can get access to satellite signals to generate a location of the wireless device (30).

9. The network node (10, 30, 50) of claim 8, wherein, if:
- the digital signal comprises a first number of reflected signals with a signal strength higher than a first threshold,
- the number of reflected signals is equal or larger than a second threshold, and
- a second number of reflected signals has a delay time lower than a third threshold,
the output is configured to be that the satellite-based positioning system (70) cannot get access to the satellite signals,
else, the output is configured to be that the satellite-based positioning system (70) can get access to the satellite signals.

10. The network node (10, 30, 50) of any of claims 8-9, wherein the first, second and third thresholds are obtained, and wherein the network node (10, 30, 50) further comprises a recalculating circuit (504) configured to recalculate at least one of the obtained thresholds so that, when the output of the determining step is that the satellite-based positioning system (70) can get satellite access to generate a location, the wireless device (30) succeeds at getting a location with the satellite-based positioning system (70), and when the output of the determining step is that the satellite-based positioning system (70) cannot get satellite access to generate a location, the wireless device (30) does not succeed at getting a location with the satellite-based positioning system (70), with a determined prediction rate.

11. The network node (10, 30, 50) of any of claims 8-10, wherein the recalculating circuit (504) is configured to recalculate based on an input number of reflections, an input reflection strength of the reflections and an input reflection delay of the reflections.

12. The network node (10, 30, 50) of any of claims 8-11, wherein the network node (10, 30, 50) is the wireless device (30).

13. The network node (10, 30, 50) of claim 12, further comprising:
a turning on circuit (505) configured to turn on the satellite-based positioning system (70) if the output is that the satellite-based positioning system (70) can get access to the satellite signals to generate the location for the wireless device (30), and
a turning off circuit (505) configured to turn off the satellite-based positioning system (70) if the output is that the satellite-based positioning system (70) cannot get access to the satellite signals to generate the location of the wireless device (30).

14. The network node (10, 30, 50) of any of claims 12-13 further comprising:
a generating circuit (506) configured to generate, with the satellite-based positioning system (70), the location of the wireless device (30) when the output is that the satellite-based positioning system (70) can get access to the satellite signals.

15. Computer program, comprising instructions which, when executed on at least one processor, cause the at least one processor to carry out the method according to any one of claims 1 to 8.

16. A computer-readable storage medium, having stored thereon a computer program, comprising instructions which, when executed on at least one processor, cause the at least one processor to carry out the method according to any one of claims 1 to 8.
